# EUROPÄISCHE PATENTSCHRIFT

(11) **EP 3 919 177 B1**
(45) Veröffentlichungstag und Bekanntmachung des Hinweises auf die Patenterteilung: **11.01.2023**
(21) Anmeldenummer: 21175045.0
(22) Anmeldetag: 20.05.2021
(51) Int. Cl.: B02C 13/09, B02C 1/02

(54) **BRECHER**
CRUSHER
CONCASSEUR

(30) Priorität: 26.05.2020 DE 102020114106
(43) Veröffentlichungstag der Anmeldung: 08.12.2021
(73) Patentinhaber: KLEEMANN GMBH, 73037 Göppingen (DE)
(72) Erfinder: MEYER, Gerd, 73340 Amstetten (DE); TEICHERT, Rainer, 42781 Haan (DE); MEIER, Jochen, 72584 Hülben (DE)
(74) Vertreter: Herrmann, Jochen

(56) Entgegenhaltungen:
- WO-A1-2017/093407
- WO-A2-2007/110744
- DE-B4-102017 002 079

## Beschreibung

Die Erfindung betrifft einen Brecher, insbesondere einen Rotationsprallbrecher, Kegelbrecher oder Backenbrecher, mit einem Brechaggregat, das einen beweglichen ersten Brechkörper, insbesondere einen Rotor oder eine Brechbacke aufweist, wobei dem ersten Brechkörper ein zweiter Brechkörper, insbesondere eine Prallschwinge oder eine Brechbacke zugeordnet ist, wobei zwischen den Brechkörpern ein Brechspalt gebildet ist, wobei mit dem ersten oder dem zweiten Brechkörper eine Überlast-Auslöseeinrichtung gekoppelt ist, die einen Hydraulikzylinder aufweist und die dazu ausgebildet ist eine die Breite des Brechspalts vergrößernde Bewegung des angekoppelten Brechkörpers zuzulassen, wobei der Hydraulikzylinder einen Druckraum aufweist, und wobei die Überlast-Auslöseeinrichtung ein Druckventil aufweist, das in seiner Öffnungsstellung eine fluidleitende Verbindung zwischen dem Druckraum und einem Niederdruckbereich schafft und in der geschlossenen Ventilstellung diese Verbindung sperrt.

Aus WO2007110744 bzw. DE 10 2017 002 079 B4 ist eine Prallbrechanlage bekannt, bei der zwischen einem drehbaren Rotor und einer Prallschwinge ein veränderbarer Brechspalt eingestellt ist. Im normalen Brechbetrieb wird das zu brechende Material dem Rotor über eine Materialzuführung zugeleitet. Der Rotor schleudert dieses gegen die Prallschwinge. Die dabei auftretenden Kräfte führen zum Brechen des Gesteinsmaterials. Das Gesteinsmaterial wird somit auf die gewünschte Korngröße zerkleinert und kann über den Brechspalt aus dem Brechergehäuse herausfallen. Nun kann es vorkommen, dass nicht brechbare Körper dem Rotor zugeführt werden. Beispielsweise kann es sich hierbei um Eisenteile handeln. Dies stellt eine kritische Überlastsituation für den Prallbrecher dar. Insbesondere besteht die Gefahr, dass es hierbei zu Schäden an dem Brecher kommt. Damit eine derartige Überlastsituation beherrschbar ist, ist an die Prallschwinge eine Kolben-Zylindereinheit angekoppelt. Mittels dieser kann die Stellung der Prallschwinge und damit die Breite des Brechspalts verändert werden. Die Kolben-Zylindereinheit umfasst eine Gasfeder, gegen die die Prallschwinge abgestützt ist.

Im normalen Brechbetrieb wird die Breite des Brechspalts auf das gewünschte Maß eingestellt. Im kritischen Überlastfall kann die Gasfeder komprimiert werden und damit die Prallschwinge ausweichen. Auf diese Weise lässt sich impulsartig der Brechspalt vergrößern. Der nicht brechbare Körper kann dann aus dem Brechspalt herausfallen. Anschließend wird die Breite des Brechspalts wieder auf das gewünschte Maß eingestellt.

Mit der in der DE 10 2017 002 079 B4 vorgeschlagenen Gasfeder wird eine Elastizität in die Abstützung der Prallschwinge eingebracht. Während des Brechbetriebs werden die Kräfte, aufgrund unterschiedlich harten und unterschiedlich großen Gesteinsbrocken in einem gewissen zulässigen Maß variieren. Die elastische Gasfeder bewirkt, in Reaktion auf diese wechselnden Kräfte, eine ständige Variation des Brechspalts und damit der Korngröße des gebrochenen Materials, was unerwünscht ist.

Aus EP 0 019 541 B1 ist eine Prallmühle bekannt, bei der der Brechspalt über einen Hydraulikdämpfer eingestellt werden kann. Der Hydraulikdämpfer weist einen Kolben auf, an den eine Kolbenstange angekoppelt ist. Der Kolben ist in einem Zylinderraum verstellbar. Die Kolbenstange ist mit der Prallschwinge verbunden. Für den Fall einer Überlast-Situation ist ein Überlastventil vorgesehen. Falls ein nicht brechbarer Körper in den Brechraum gelangt, wird das Überlastventil ausgelöst. Hierdurch vergrößert sich der Brechspalt und der nicht brechbare Körper kann wieder aus dem Brechraum fallen.

Bei Brechern, insbesondere bei Rotationsprallbrechern ist es nun häufig so, wie dies bereits vorstehend angedeutet wurde, dass im normalen Brechbetrieb Gesteinsmaterial mit unterschiedlicher Größe und unterschiedlicher Härte dem Brechaggregat zugeführt werden. Diese Gesteinsmaterialien sind für den Rotationsprallbrecher beherrschbar und können gebrochen werden. Insofern muss ein derartiger unkritischer Fall unterschieden werden, von einer kritischen Überlast-Situation, in der ein nicht brechbarer Körper in den Bereich des Brechaggregats gelangt.

Bei den bekannten Rotationsprallbrechern ist dies allerdings nicht möglich. Insbesondere wird sicherheitshalber die Überlast-Auslöseeinrichtung so eingestellt, dass diese bereits in einem unkritischen Lastfall auslöst, obwohl dies noch gar nicht erforderlich ist. Hierunter leidet die Effektivität des Brechvorgangs. Insbesondere dauert es stets eine gewisse Zeit, bis nach einer aufgetretenen Auslösung das Brechaggregat wieder ordnungsgemäß eingestellt ist.

Aufgabe der Erfindung ist es mithin einen Brecher der eingangs erwähnten Art bereitzustellen, der einen effektiven Brechbetrieb ermöglicht.

Diese Aufgabe wird dadurch gelöst, dass die Überlast-Auslöseeinrichtung ein Hochdruckventil aufweist, das infolge einer kritischen Überlastsituation in seiner Öffnungsstellung eine fluidleitende Verbindung zwischen dem Druckraum des Hydraulikzylinders und einem Niederdruckbereich schafft, und nach Beendigung der Überlastsituation in eine Schließstellung verstellt wird, um diese Verbindung zu sperren, und dass der für die Öffnung des Druckventils erforderliche Auslösedruck geringer ist als der für die Öffnung des Hochdruckventils erforderliche Auslösedruck.

Wenn während des Brechbetriebs kurze Lastspitzen, beispielsweise hervorgerufen durch einen großen Gesteinsbrocken im Brechraum auftreten, so stellt dies eine zulässige Lastsituation dar, die vom Brechaggregat beherrschbar ist. Dabei muss lediglich der Brechspalt nur geringfügig vergrößert werden, um eine übermäßige Belastung des Brechaggregats zu vermeiden. Der große Gesteinsbrocken kann dann gebrochen werden und es entsteht kurzzeitig eine gröbere Körnung im gebrochenen Material. Im Übrigen kann die Einstellung des Brechspalts auch bei stark variierenden Lasten im Brechraum beibehalten werden.

Wenn nun ein nicht brechbarer Körper, beispielsweise ein Eisenklotz in den Brechraum gelangt, so entsteht eine hohe Belastungsspitze. Auf diese kann die Überlast-Auslöseeinrichtung dann mit dem angekoppelten Hochdruckventil reagieren. Auf diese Weise wird der Wirkungsgrad des Brechers und dessen Betriebssicherheit auf einfache Weise signifikant verbessert.

Gemäß einer bevorzugten Erfindungsvariante kann es vorgesehen sein, dass der erforderliche Auslösedruck zur Öffnung des Druckventils ≤100 bar ist, und dass der erforderliche Auslösedruck zur Öffnung des Hochdruckventils ≥200 bar ist.

Die Erfinder haben erkannt, dass bei Brechern, insbesondere bei Rotationsprallbrechern unkritische Überlastsituationen zu einem Druck im Hydraulikzylinder im Bereich zwischen 40 und 100 bar führen können. Entsprechend kann damit der Auslösedruck zur Öffnung des Druckventils kleiner 100 bar eingestellt werden. Besonders bevorzugt kann es vorgesehen sein, dass der Druck im Hydraulikzylinder mittels des Druckventils auf einen Bereich von 50 bis 65 bar begrenzt wird. Hierdurch kann den gängigsten Brechaufgaben in optimaler Weise Rechnung getragen werden. Demgegenüber sollte der erforderliche Auslösedruck für das Hochdruckventil >150 bar eingestellt werden, um eine kritische Überlastsituation sicher zu beherrschen. Vorzugsweise sollte der Auslösedruck im Hydraulikzylinder, abhängig von der Brecherauslegung, größer 200 bar, größer 250 bar, größer 300 bar oder größer 350 bar sein. Bei Brechern mit vergleichsweise kleiner Brechleistung werden eher die kleineren Druckwerte und bei Brechern mit größerer Brechleistung tendenziell höhere Auslösedrücke eingestellt

Eine besonders bevorzugte Erfindungsgestaltung ist derart, dass bei geöffnetem Druckventil der an den Hydraulikzylinder angekoppelte Brechkörper derart verstellt wird, dass sich eine erste Breitenvergrößerung des Brechspalts ergibt, dass bei geöffnetem Hochdruckventil der an den Hydraulikzylinder angekoppelte Brechkörper derart verstellt wird, dass sich eine zweite Breitenvergrößerung des Brechspalts ergibt, und dass die erste Breitenvergrößerung kleiner ist als die zweite Breitenvergrößerung, wobei vorzugsweise vorgesehen ist, dass das Verhältnis der ersten Breitenvergrößerung zu der zweiten Breitenvergrößerung ≤ 0,5, besonders bevorzugt ≤ 0,25 ist.

Bei einer solchen Gestaltung des Brechers wird dessen Effektivität weiter verbessert. Bei einer unkritischen Überlastsituation wird der Brechspalt nur geringfügig vergrößert, um diese sicher zu beherrschen. Nachdem die unkritische Überlastsituation beendet ist, kann der geringfügig vergrößerte Brechspalt schnell wieder auf das erforderliche Maß zurück geregelt werden. Bei einer kritischen Überlastsituation hingegen muss in sehr kurzer Zeit der Brechspalt weit geöffnet werden, um eine Beschädigung des Brechaggregats auszuschließen.

Ein erfindungsgemäßer Brecher kann insbesondere dergestalt sein, dass infolge der Öffnung des ersten Druckventils eine erste Menge Hydraulikflüssigkeit über die fluidleitende Verbindung in den Niederdruckbereich gelangt, dass infolge der Öffnung des Hochdruckventils eine zweite Menge an Hydraulikflüssigkeit über die zugeordnete fluidleitende Verbindung in den Niederdruckbereich gelangt, und dass die erste Menge kleiner ist als die zweite Menge, wobei vorzugsweise vorgesehen ist, dass das Verhältnis der ersten Menge zu der zweiten Menge ≤ 0,5 , besonders bevorzugt ≤ 0,25 ist. Mit dieser einfachen Maßnahme kann eine unterschiedlich große Einstellung des Brechspalts in den beiden Überlastsituationen (unkritische Überlast und kritische Überlast) erfolgen.

Wenn vorgesehen ist, dass die Überlast-Auslöseeinrichtung an einen Hydraulikkreislauf angeschlossen ist, und dass die über die fluidleitende Verbindung des Hochdruckventils abgeleitete Hydraulikflüssigkeit über eine Verbindungsleitung in den Hydraulikkreislauf geleitet wird, dann kann im kritischen Überlastfall die Hydraulikflüssigkeit wieder verwendet werden. Sie lässt sich dann, beispielsweise über eine Pumpe, wieder zurück in das Leitungssystem des Hydraulikkreislaufes fördern.

Gemäß einer möglichen Erfindungsvariante kann es vorgesehen sein, dass das Hochdruckventil einen Kolben aufweist, der gegen die Vorspannung einer Feder zwischen der Schließstellung und der Öffnungsstellung verstellbar ist, und dass der Kolben ein Druckstück aufweist, das in der Schließstellung an einem Ventilsitz federvorgespannt abgedichtet gehalten ist. Über die Feder lässt sich der erforderliche Auslösedruck zur Öffnung des Ventils einstellen. Auf diese Weise kann auch ein Bausatz gestaltet werden, bei dem verschiedene Federn mit unterschiedlicher Federsteifigkeit Verwendung finden. Über die Wahl der geeigneten Feder kann der Auslösedruck und die Auslösecharakteristik des Hochdruckventils bestimmt und dieses somit auf den jeweiligen Brechertyp ausgelegt werden.

Eine mögliche Erfindungsvariante kann so ausgeführt sein, dass der Kolben wenigstens eine erste und wenigstens eine zweite Druckfläche aufweist, dass in der geschlossenen Stellung des Hochdruckventils auf den Druckflächen der im Druckraum des Hydraulikzylinder anstehende Hydraulikdruck auflastet, dass die Projektionen der ersten und der zweiten Druckflächen in eine Ebene senkrecht zu der Vorspannrichtung der Feder eine erste und eine zweite projizierte Fläche bilden, wobei sich die Flächennormale auf die erste projizierte Fläche entgegengesetzt zu der Richtung der Öffnungsbewegung des Kolbens erstreckt, und sich die Flächennormale auf die zweite projizierte Fläche in Richtung der Öffnungsbewegung des Kolbens erstreckt, und dass der Flächeninhalt der ersten projizierten Fläche größer ist als der Flächeninhalt der zweiten projizierten Fläche.

Bei einer solchen Gestaltung des Hochdruckventils lassen sich die hohen Drücke sicher beherrschen. Der Schließdruck wird bestimmt durch die Vorspannkraft der Feder und die Kraft, welche sich aus der Differenz der projizierten Flächen multipliziert mit dem anstehenden Druck ergibt. Über eine geeignete Wahl der Flächendifferenz kann damit eine relativ weiche Feder verwendet werden, um das Hochdruckventil sicher im geschlossenen Zustand zu halten. Hierdurch wird der konstruktive Aufwand für das Hochdruckventil deutlich vereinfacht. Zudem lassen sich mit weichen Federn, beispielsweise Schraubenfedern, auf einfache Weise flache Federkennlinien verwirklichen. Diese ermöglichen einen großen Verstellweg des Kolbens gegen eine relativ schwache Federkraft. Entsprechend kann das Hochdruckventil bei einem anstehenden Auslösedruck schnell und weit öffnen, sodass die Hydraulikflüssigkeit in kurzer Zeit aus dem Hydraulikzylinder abströmen kann. Die kritische Überlastsituation kann so sicher beherrscht werden.

Im Rahmen der Erfindung kann es insbesondere auch vorgesehen sein, dass nicht nur eine erste Druckfläche und/oder eine zweite Druckfläche vorhanden ist. Vielmehr können auch mehrere erste und/oder mehrere zweite Druckflächen vorgesehen sein. Die Projektionen dieser mehreren Druckflächen ergibt dann eine erste Gesamt-Projizierte Fläche mit einer Flächennormale in und eine zweite Gesamt-Projizierte Fläche mit einer Flächennormale entgegen der Öffnungsbewegung des Kolbens. Der Flächeninhalt der ersten Gesamt-Projizierten-Fläche ist dann größer als der Flächeninhalt der zweiten Gesamt-Projizierten Fläche.

Erfindungsgemäß kann es auch weiterhin vorgesehen sein, dass der Kolben eine erste Druckfläche oder erste Druckflächen aufweist, dass in der geschlossenen Stellung des Hochdruckventils auf der Druckfläche oder den Druckflächen der im Druckraum des Hydraulikzylinder anstehende Hydraulikdruck auflastet, dass die Projektion der erste/-n Druckfläche/-n in eine Ebene senkrecht zu der Vorspannrichtung der Feder eine erste projizierte Fläche bildet/bilden, wobei sich die Flächennormale auf diese erste projizierte Fläche entgegengesetzt zu der Richtung der Öffnungsbewegung des Kolbens erstreckt, dass der Kolben wenigstens eine dritte Druckfläche aufweist, dass die Projektion der dritten Druckfläche/-n in eine Ebene senkrecht zu der Vorspannrichtung der Feder eine dritte projizierte Fläche bildet, wobei sich die Flächennormale auf diese dritte projizierte Fläche entgegengesetzt zu der Richtung der Öffnungsbewegung des Kolbens erstreckt, dass der Hydraulikdruck im Druckraum des Hydraulikzylinders in der Schließstellung des Hochdruckventils nicht an der dritten Druckfläche ansteht, und dass in der geöffneten Ventilstellung eine räumliche Verbindung zwischen der dritten Druckfläche und dem Druckraum geschaffen ist.

Im geschlossenen Zustand des Hochdruckventils lastet der im Druckraum des Hydraulikzylinders anstehende Druck auf der ersten Druckfläche. Wenn nun das Hochdruckventil bei einer kritischen Überlastsituation auslöst, wird der Kolben in seine Öffnungsrichtung verschoben. Der Bereich vor der dritten Druckfläche gelangt dann ebenfalls in räumliche Verbindung mit dem Druckraum. Damit lastet auf dieser dritten Druckfläche ein hoher Druck. Infolge dieses hohen Drucks entsteht an der dritten Druckfläche eine zusätzliche Kraft in Öffnungsrichtung des Kolbens. Diese Kraft verstärkt mithin die Öffnungskraft zur Verstellung des Kolbens. Sobald diese Kraft wirksam wird, erfolgt eine zusätzliche Beschleunigung des Kolbens, zugunsten einer kurzen Öffnungszeit. Auf diese Weise wird erreicht, dass bei einer anstehenden kritischen Überlastsituation eine schnelle Öffnung des Hochdruckventils erfolgt. Damit kann die Hydraulikflüssigkeit rasch aus dem Hydraulikzylinder abströmen und der Brechkörper zugunsten einer schnellen Öffnung des Brechspalts verstellt werden.

Erfindungsgemäß kann es auch vorgesehen sein, dass der Kolben des Hochdruckventils eine Durchführung aufweist, die insbesondere als Bohrung ausgebildet ist, und die eine räumliche Verbindung zwischen dem Bereich vor der ersten Druckfläche und dem Fluidbereich vor der zweiten Druckfläche schafft. Die räumliche Verbindung zwischen den beiden Druckflächen erfolgt zumindest bereichsweise mithin über den Kolben. Dieser kann entsprechend einfach mechanisch bearbeitet werden.

Eine besonders kompakte Bauweise lässt sich dann erreichen, wenn vorgesehen ist, dass der Kolben des Hochdruckventils einen Stützabschnitt aufweist, auf den die als Schraubenfeder ausgebildete Feder aufgeschoben ist, dass der Kolben eine Schulter aufweist, an der das eine Ende der Feder abgestützt ist, und dass das andere Ende der Feder an einem Federhalter abgestützt ist, der Teil eines Ventilkörpers ist in den der Kolben eingesetzt ist. Die Feder wird dabei auch an dem Stützabschnitt gegen Ausknicken gesichert.

Eine denkbare Erfindungsausgestaltung ist derart, dass der Kolben des Hochdruckventils einen Führungsabschnitt aufweist, der vorzugsweise abgedichtet an einer Innenwand eines Führungskörpers geführt ist.

Ein erfindungsgemäßer Brecher kann dergestalt sein, dass der Ventilsitz für den Kolben von einem Ventilstück des Führungskörpers gebildet ist, der vorzugsweise in Form einer Buchse ausgebildet ist, dass der Führungskörper in eine Aufnahme eines Ventilkörpers des Hochdruckventils eingesetzt ist, und dass der Führungskörper wenigstens einen Leitungsabschnitt bildet, über den das Hydraulikmedium in der Öffnungsstellung des Hochdruckventils aus dem Druckraum abströmt. Der Führungskörper kann als separates Bauteil einfach gefertigt werden. Dementsprechend kann der Ventilsitz passgenau an den Führungskörper angearbeitet werden.

Zur Verwirklichung einer kompakten Bauweise des Hochdruckventils kann es weiterhin auch vorgesehen sein, dass der Führungskörper eine Innenwand aufweist, die im Abstand zu dem Stützabschnitt des Kolbens steht, und dass im Abstandsbereich die Feder aufgenommen ist.

Erfindungsgemäß kann es beispielsweise auch vorgesehen sein, dass das Hochdruckventil ein Koppelstück und einen Ventilkörper aufweist, die miteinander über Anschlussseiten verbunden sind, dass das Koppelstück und der Ventilkörper im Bereich dieser Anschlussseiten einen Entlastungsraum begrenzen, und dass der Entlastungsraum in der Öffnungsstellung des Hochdruckventils eine fluidleitende Verbindung zwischen dem Druckraum des Hydraulikzylinders und einer Ableitung des Hochdruckventils schafft. Im kritischen Überlastfall kann in dem Entlastungsraum, nach Öffnen des Hochdruckventils schnell eine große Menge Hydraulikflüssigkeit aufgenommen und dann über die Ableitung abgeleitet werden. Dadurch dass der Entlastungsraum im Bereich der Anschlussseiten angeordnet ist, kann dieser einfach gefertigt werden.

Wenn das Hochdruckventil in seine geöffnete Position verstellt wurde, so kann es vorkommen, dass unbeabsichtigt Hydraulikflüssigkeit in einen Raumbereich gelangt, der von dem Kolben gegenüber dem Druckbereich des Hochdruckzylinders abgegrenzt ist. Diese Hydraulikflüssigkeit kann zu der Gefahr führen, dass eine freie Verstellung des Kolbens behindert wird. Um die zuverlässige Funktion des Hochdruckventils dann sicher garantieren zu können, kann es vorgesehen sein, dass dieser von dem Kolben gegenüber dem Druckraum des Hydraulikzylinders räumlich abgrenzte Raumbereich über eine Ableitung mit einem Niederdruckbereich in räumlicher Verbindung steht. Vorzugsweise kann platzsparend in dem Raumbereich die Feder aufgenommen sein, die zur Vorspannung des Kolbens dient.

Wenn vorgesehen ist, dass mittels eines Wegmessers die Stellung des Kolbens gemessen oder erkannt wird, dann lässt sich die Betriebsstellung des Hochdruckventils überwachen. Beispielsweise lässt sich dann die Überlast-Situation detektieren. Nach Beendigung der Überlast-Situation kann über den Wegmesser die Schließstellung des Kolbens erkannt werden. Die Maschinensteuerung kann daraufhin veranlasst werden, den Hydraulikzylinder wieder in seine Betriebsposition zurückzustellen.

Wenn vorgesehen ist, dass das Druckventil und das Hochdruckventil mit dem Hydraulikzylinder unter Bildung einer Baueinheit miteinander verbunden sind, dann lässt sich diese Baueinheit einfach und schnell montieren bzw. im Schadensfall austauschen.

Besonders bevorzugt ist es vorgesehen, dass eine Steuereinrichtung vorgesehen ist, die nach Beendigung der Überlast-Situation und nach dem Schließen des Druckventils und des Hochdruckventils den Hydraulikzylinder mit Hydraulikflüssigkeit derart befüllt, dass dieser unter Bildung des Betriebs-Brechspalts in seine Betriebsposition rückgestellt wird.

Die Erfindung wird im Folgenden anhand eines in den Zeichnungen dargestellten Ausführungsbeispiels näher erläutert. Es zeigen:
Figur 1 in perspektivischer Darstellung ein Brechaggregat eines Rotationsprallbrechers,
Figuren 2 und 3 in schematischer Darstellung das Brechaggregat gemäß Figur 1 mit einer Überlast-Auslöseeinrichtung,
Figur 4 die Überlast-Auslösevorrichtung gemäß Figuren 2 und 3 in Seitenansicht,
Figur 5 die Überlast-Auslösevorrichtung gemäß Figur 4 in perspektivischer Darstellung,
Figur 6 in teilweise geschnittener Darstellung eine Isometrie eines Hochdruckventils der Überlast-Auslösevorrichtung gemäß den Figuren 4 und 5,
Figur 7 das Hochdruckventil gemäß Figur 6 in Seitenansicht und im Schnitt,
Figuren 8 bis 10 drei verschiedene Darstellungen des Hochdruckventils gemäß den Figuren 6 und 7,
Figur 11 das Hochdruckventil längs des in Figur 9 mit XI-XI markierten Schnittverlaufs und
Figur 12 das Hochdruckventil entlang des in Figur 10 mit XII-XII markierten Schnittverlaufs.

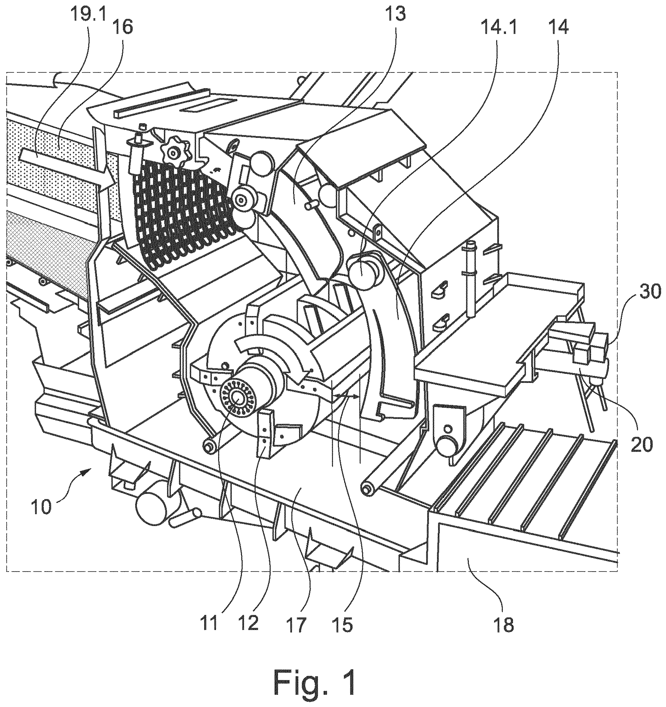

In Figur 1 ist ein Brechaggregat 10 eines Rotationsprallbrechers dargestellt. Das Brechaggregat 10 umfasst ein Brechergehäuse, in dem ein beweglicher Brechkörper 11 drehbar gelagert ist. Entsprechend ist der bewegliche Brechkörper 11 vorliegend als Rotor ausgebildet. Der Rotor trägt im Bereich seines Außenumfangs Schlagleisten 12.

Innerhalb des Brechergehäuses ist eine obere Prallschwinge 13 angeordnet. Weiterhin ist im Brechergehäuse auch ein weiterer Brechkörper 14 angeordnet, der vorliegend eine untere Prallschwinge bildet.

Zwischen dem Rotor (beweglicher Brechkörper 11) und der unteren Prallschwinge (Brechkörper 14) wird ein Brechspalt 15 gebildet. Bei drehendem Rotor bilden die radial äußeren Enden der Schlagleisten 12 einen äußeren Brechkreis. Dieser Brechkreis bildet zusammen mit einer zugewandten Fläche der unteren Prallschwinge den Brechspalt 15. Die untere Prallschwinge 14 ist mittels eines Schwenklagers 14.1 schwenkbar gelagert. Über die gewählte Schwenkstellung der unteren Prallschwinge kann die Breite des Brechspalts 15 eingestellt werden.

Wie Figur 1 weiter erkennen lässt, ist dem Brechaggregat 10 eine Materialzuführung 16 zugeordnet. Über diese Materialzuführung 16 kann zu brechendes Material 19.1 in den Brechraum gefördert werden. Die Förderrichtung ist in Figur 1 mit einem Pfeil symbolisiert. Wenn das zu brechende Material 19.1 in den Bereich des Rotors gelangt, wird es mittels der Schlagleisten 12 nach außen weggeschleudert. Dabei trifft dieses Material auf die obere Prallschwinge 13 und auf die untere Prallschwinge 14. Beim Aufprall auf die beiden Prallschwingen wird das zu zerkleinernde Material 19.1 gebrochen.

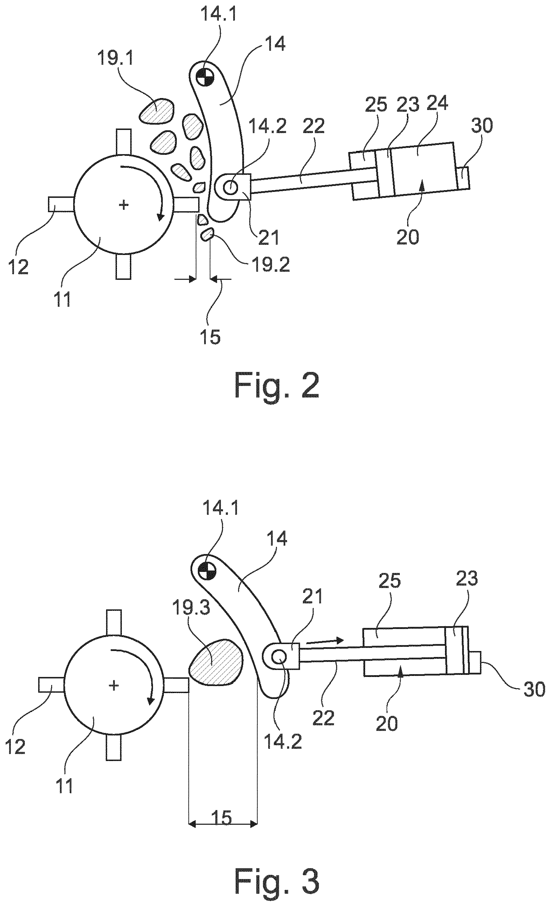

Für die untere Prallschwinge ist dies beispielhaft in den Figuren 2 und 3 näher dargestellt. Beim Auftreffen des zu brechenden Materials 19.1 auf den Brechkörper 14 entsteht gebrochenes Material 19.2, wie dies Figur 2 zeigt. Sobald dieses gebrochene Material eine Korngröße aufweist, die kleiner ist als der Brechspalt 15, fällt dieses gebrochene Material 19.2 durch den Brechspalt 15 hindurch. Es gelangt dann in einen Sammelbereich 17 unterhalb des beweglichen Brechkörpers 11 (Rotor). Wie Figur 1 zeigt, ist an den Sammelbereich 17 eine Fördereinrichtung 18 angeschlossen. Über diese Fördereinrichtung 18 kann das gebrochene Material 19.2 abtransportiert werden.

Wie Figur 2 weiter zeigt, ist der Brechkörper 14 mittels eines Hydraulikzylinders 20 gegenüber der Maschinenkonstruktion des Brechers abgestützt. Die Abstützung an der Maschinenkonstruktion, beispielsweise an dem Maschinengestell des Brechers, ist in den Zeichnungen nicht näher detailliert. Allerdings ist in Figur 1 erkennbar, dass der Hydraulikzylinder 20 geschützt im Wesentlichen außerhalb des Brechergehäuses montiert ist, in dem der Rotor aufgenommen ist.

Wie die Figuren 2 und 3 zeigen, weist der Hydraulikzylinder 20 einen Zylinder 25 auf, in dem ein Kolben 23 verstellbar geführt ist. Der Kolben 23 trägt eine Kolbenstange 22. Die Kolbenstange 22 ist an ihrem dem Kolben 23 abgewandten Ende mit einem Koppelstück 21 ausgestattet, welches ein Lagerteil 21.1 aufweist. Mittels dieses Lagerteils 21.1 ist das Koppelstück 21 an ein Lager 14.2 des Brechkörpers 14 angeschlossen. Damit ist der Hydraulikzylinder 20 schwenkbar an dem Brechkörper 14 angekoppelt. Die Koppelstelle steht im Abstand zu dem Schwenklager 14.1.

Wie Figur 2 erkennen lässt, begrenzt der Kolben 23 einen Druckraum 24 im Zylinder 25. In dem Druckraum 24 ist Hydraulikflüssigkeit, insbesondere Hydrauliköl, eingefüllt. Der Kolben 23 wird gegenüber diesem inkompressiblen Medium abgestützt. Damit wird die Kolbenstange 22 und der Brechkörper 14 in der in Figur 2 gezeigten vorgegebenen Brechstellung gehalten.

Abhängig von der anstehenden Brechaufgabe ist es erforderlich, die Betriebsposition des Brechspalts 15 geeignet einzustellen. Hierzu weist der Brecher eine Steuerungseinrichtung auf. Wenn ausgehend von der in Figur 2 gezeigten Position der Brechspalt 15 breiter eingestellt werden soll, so wird Hydraulikflüssigkeit aus dem Druckraum 24 abgelassen. Hierdurch fährt der Kolben 23 weiter in den Zylinder 25 ein, bis der gewünschte Brechspalt 15 eingestellt ist. Wird hingegen ein engerer Brechspalt 15 gewünscht, so wird zusätzliche Hydraulikflüssigkeit in den Druckraum 24 eingefüllt. Hierdurch wird der Kolben 23 unter Vergrößerung des Druckraums 24 verstellt. Die Kolbenstange 22 fährt weiter aus dem Zylinder 25 aus. Hierdurch wird der Brechkörper 14 im Uhrzeigersinn verschwenkt, sodass sich eine Verjüngung des Brechspalts 15 ergibt.

Wie die Figuren 1 bis 3 zeigen, ist weiterhin eine Überlast-Auslöseeinrichtung 30 verwendet. Diese Überlast-Auslöseeinrichtung 30 ist vorzugsweise fest mit dem Hydraulikzylinder 20 verbunden.

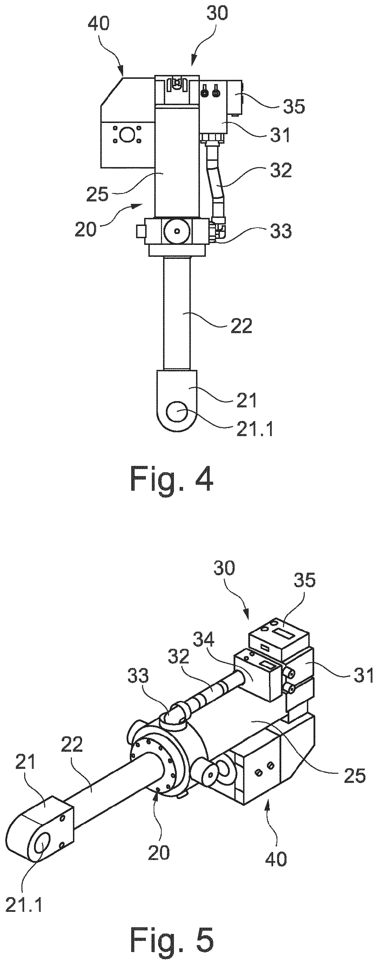

Die Figuren 4 und 5 zeigen, dass die Überlast-Auslöseeinrichtung 30 einen Steuerblock 31 aufweist, der ein Druckventil aufnimmt. Dieses Druckventil kann von einem gängigen Druck-Begrenzungsventil gebildet sein, wobei dieses Druck-Begrenzungsventil einerseits an den Druckraum 24 und andererseits an einen Niederdruckbereich angeschlossen ist. Im vorliegenden Ausführungsbeispiel wird der Anschluss an den Niederdruckbereich über eine Hydraulikleitung 32 hergestellt. Die Hydraulikleitung 32 führt von dem Druckventil (Steuerblock 31) zu einem Hydraulikanschluss 33 des Hydraulikzylinders 20. Der Hydraulikanschluss 33 mündet in den Zylinder 25 und zwar auf der dem Druckraum 24 abgewandten Seite des Kolbens 23. Dies ist in den Figuren 2 und 3 der Bereich, in dem die Kolbenstange 22 angeordnet ist. Zusätzlich ist wenigstens ein Ableitbereich 34 vorgesehen, der ebenfalls in räumliche Verbindung mit dem Bereich des Zylinders 25 steht, in dem der Hydraulikanschluss 33 mündet. Über diesen Ableitbereich 34 kann Hydraulikfluid, welches aus dem Druckraum 24 verdrängt wird und aufgrund des Volumens der Kolbenstange 22 nicht in den Niederdruckraum des Zylinders 25 passt, in ein Hydrauliksystem geleitet werden. Beispielsweise kann dieses verdrängte Hydraulikfluid über ein weiteres Druckbegrenzungsventil in einen Hydrauliktank abgelassen werden. Das Druckventil 31 (und auch das weitere Druckbegrenzungsventil) kann in Form eines einfachen Rückschlagventils ausgebildet sein, dass in eine Richtung wirksam ist, um das Hydraulikfluid aus dem Druckraum 24 ableiten zu können.

Zusätzlich kann ein Steuerorgan vorgesehen sein. Wenn der Kolben 23 unter Vergrößerung des Druckraums 24 wieder zurückgestellt werden soll, so kann unter Umgehung des Druckventils 31 Hydraulikflüssigkeit über die Hydraulikleitung 32 in das Steuerorgan eingeleitet und in den Druckraum 24 gepumpt werden. Hierdurch wird der Kolben 23 unter Vergrößerung des Druckraums 24 verschoben. Beispielsweise kann das Steuerorgan von einem Rückschlagventil gebildet sein, welches entgegengesetzt zu dem Druckventil 31 wirkt.

Das Druckventil 31 ist so eingestellt, dass es bei einem Hydraulikdruck im Druckraum 24 im Bereich zwischen 50 und 100 bar, vorzugsweise im Bereich zwischen 50 und 65 bar, öffnet. Dieser Lastfall entspricht einer Betriebssituation, bei der aufgrund von zu brechendem Material 19.1 kurzseitige Lastspitzen entstehen. Diese kurzzeitigen Lastspitzen können beispielsweise dann auftreten, wenn sich ein großer Gesteinsbrocken in dem zu brechenden Material 19.1 befindet. In diesem Fall löst das Druckventil 31 aus. Der Kolben 23 fährt ein Stück weit in den Zylinder 25 ein, sodass sich eine Vergrößerung des Brechspalts 25 ergibt. Der Gesteinsbrocken wird dann nur grob gebrochen.

Wie die Figuren 4 und 5 erkennen lassen, ist zusätzlich zu dem Druckventil 31 ein Hochdruckventil 40 vorgesehen. Dieses Hochdruckventil 40 kann vorzugsweise, wie dies die Figuren 4 und 5 erkennen lassen, ebenfalls an dem Hydraulikzylinder 20 montiert sein.

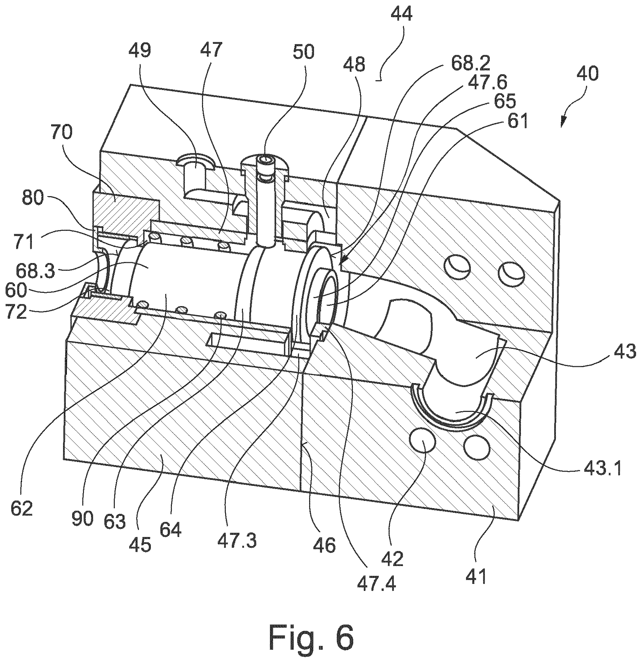

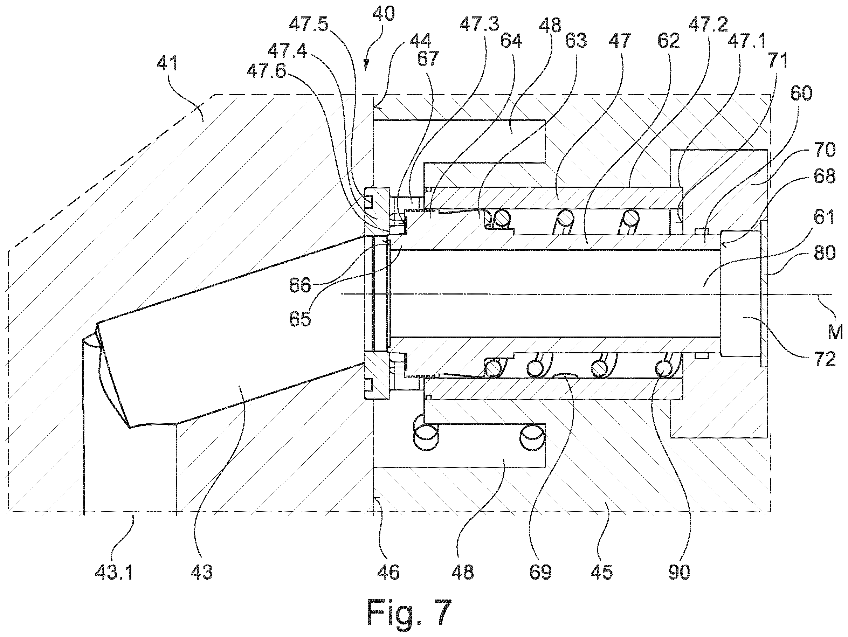

Das Hochdruckventil 40 ist in den Figuren 6 und 7 näher detailliert. Wie diese Zeichnungen erkennen lassen, besitzt das Hochdruckventil 40 ein Koppelstück 41, in das eine Druckleitung 43 eingearbeitet ist. Das Koppelstück 41 weist Befestigungsaufnahmen 42 auf. Diese Befestigungsaufnahmen 42 stehen im montierten Zustand in Flucht mit Schraubaufnahmen des Hydraulikzylinders 20. Im montierten Zustand steht die Druckleitung 43 über eine Öffnung 43.1 in räumlicher Verbindung mit dem Druckraum 24 des Hydraulikzylinders 20.

Das Hochdruckventil 40 besitzt einen Ventilkörper 45, der gehäuseartig ausgebildet sein kann. Der Ventilkörper 45 bildet eine Anschlussseite 46. Mit dieser Anschlussseite 46 kann der Ventilkörper 45 mit einer Anschlussseite 44 des Koppelstücks 41 verbunden sein. Die Verbindung zwischen dem Koppelstück 41 und dem Ventilkörper 45 erfolgt über nicht dargestellte Schraubverbindungen.

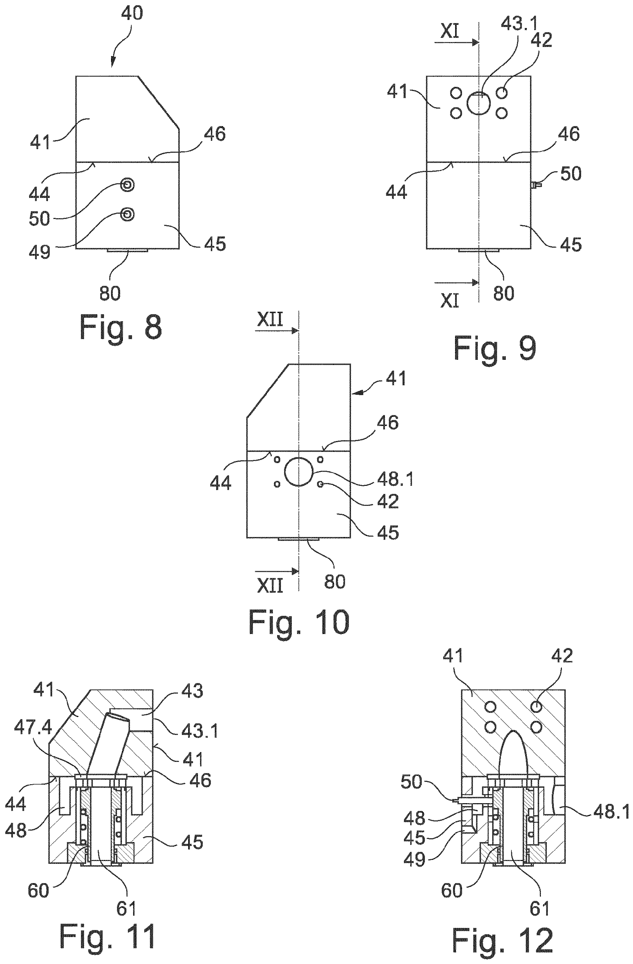

Der Ventilkörper 45 besitzt im Bereich seiner Anschlussseite 46 eine Ausnehmung, die einen Entlastungsraum 48 bildet. Dieser Entlastungsraum 48 mündet in einer Ausströmöffnung 48.1, die in den Figuren 10 und 12 erkennbar ist.

Der Ventilkörper 45 ist mit einer Aufnahme versehen. In diese Aufnahme ist ein Führungskörper 47 eingesetzt. Der Führungskörper 47 ist vorzugsweise an seinem Außenumfang zylindrisch ausgebildet. Die Aufnahme bildet einen Innenzylinder, in die der Führungskörper 47 abgedichtet eingesetzt ist.

Der Führungskörper 47 umschließt mit einer Innenwand 47.2 einen Aufnahmebereich. Dieser Aufnahmebereich bildet auch eine Führungsfläche für einen Kolben 60, wie dies später näher erläutert wird. An seiner der Anschlussseite 46 abgewandten Seite ist der Führungskörper 47 mit einem Stützabschnitt 47.1 versehen. Gegenüberliegend dem Stützabschnitt 47.1 bildet der Führungskörper 47 ein Ventilstück 47.4 mit einem Ventilsitz 47.6. Der Führungskörper 47 ist mittels einer Dichtung 47.5 im Bereich der Anschlussseite 44 gegenüber dem Koppelstück 41 abgedichtet.

Wie Figur 7 erkennen lässt, besitzt der Führungskörper 47 wenigstens einen Leitungsabschnitt 47.3, der mit dem Entlastungsraum 48 in fluidleitende Verbindung steht. Zur Montage des Führungskörpers 47 wird dieser auf der der Anschlussseite 46 abgewandten Seite in den Ventilkörper 45 eingesetzt. Dabei wird die Einsetzbewegung mit dem Ventilstück 47.4 begrenzt. Das Ventilstück 47.4 schlägt an dem Koppelstück 41 an, wie dies Figur 7 zeigt.

In den Führungskörper 47 kann der Kolben 60 eingesetzt werden. Der Kolben 60 ist an seiner Außenseite mit einem Führungsabschnitt 64 versehen. Dieser Führungsabschnitt 64 wird von einem im Wesentlichen zylindrischen Körper gebildet, wobei in die Außen-Umfangsfläche dieses Körpers Dichtrillen eingearbeitet sein können. Der Führungsabschnitt 64 ist in Richtung der Mittellängsachse M des Kolbens 60 linear verstellbar an der zylindrischen Innenwand 47.2 des Führungskörpers 47 gehalten.

Wie Figur 7 weiter zeigt, besitzt der Kolben 60 ein Druckstück 65. In seiner Schließstellung und damit in der Schließstellung des Hochdruckventils 40, liegt der Kolben mit dem Druckstück 65 an dem Ventilsitz 47.6 des Führungskörpers 47 dichtend an.

Der Kolben 60 bildet eine 1. Druckfläche 66 und weiterhin eine 2. Druckfläche 68. Die 1. Druckfläche 66 ist vorzugsweise im Bereich des Druckstücks 65 angeordnet. Weiterhin vorzugsweise kann die 2. Druckfläche 68 gegenüberliegend dem Druckstück 65 von dem freien Ende des Kolbens 60 gebildet sein.

Figur 7 zeigt, dass der Kolben 60 auch eine 3. Druckfläche 67 aufweist. Diese 3. Druckfläche 67 ist gegenüber der 1. Druckfläche 66 in Richtung der Mittellängsachse M des Kolbens 60 zurückversetzt angeordnet. Die 3. Druckfläche 67 wird vorzugsweise von dem Führungsabschnitt 64 gebildet.

Wenn der Kolben 60 in dem Führungskörper 47 montiert ist, so kann von der der Anschlussseite 46 gegenüberliegenden Seite eine Feder 90 in den Bereich zwischen der Innenwand 47.2 und einem Stützabschnitt 62 des Kolbens eingeschoben werden.

Die Feder 90 ist vorliegend als Schraubenfeder ausgebildet. Im montierten Zustand stützt sich die Feder 90 mit ihrem einen Ende an einer Schulter 63 des Kolbens 60 ab. Das gegenüberliegende Ende der Feder 90 ist an einer Stützfläche 71 eines Federhalters 70 abgestützt. Der Federhalter 70 kann vorzugsweise als separates Bauteil ausgebildet sein. Nachdem der Kolben 60 und die Feder 90 sowie der Führungskörper 47 im Ventilkörper 45 montiert sind, wird der Federhalter 70 in die in Figur 7 gezeigte Montageposition gebracht und mit dem Ventilkörper 45 verschraubt. Im montierten Zustand stützt sich der Führungskörper 47 mit einem Stützabschnitt 47.1 an dem Federhalter 70, vorzugsweise an der Stützfläche 71 ab. Damit presst der Federhalter 70 den Führungskörper 47 mit seinem Ventilstück 47.4 gegen das Koppelstück 41. Die Dichtung 47.5 wird dabei komprimiert und sorgt hier für einen dichten Abschluss. Der Federhalter 70 spannt die Feder 90 zwischen der Stützfläche 71 und der Schulter 63 vor. Auf diese Weise wird eine Vorspannkraft in den Kolben 60 eingebracht. Mittels dieser Vorspannkraft wird der Kolben mit seinem Druckstück 65 umfänglich dichtend gegen den Ventilsitz 47.6 des Führungskörpers 47 gespannt.

Figur 7 zeigt, dass zusätzlich ein Verschluss 80 mit dem Federhalter 70 dichtend verbunden sein kann. Denkbar ist es jedoch auch, dass der Verschluss 80 einteilig mit dem Federhalter 70 verbunden ist.

Die Wirkrichtung der Feder 90 und damit die Richtung der Vorspannkraft wirkt entlang der Mittellängsachse M des Kolbens 60.

Die 1. und die 3. Druckfläche 66 und 67 sind so ausgebildet, dass die Projektion dieser Druckflächen 66, 67 in eine Ebene senkrecht zu der Vorspannrichtung der Feder 90 1. und 3. projizierte Flächen bilden, wobei sich die Flächennormale auf diese 1. und 3. projizierten Flächen entgegengesetzt zu der Richtung der Öffnungsbewegung des Kolbens 60 (in Figur 7 von links nach rechts) erstreckt.

Die Projektion der zweiten Druckfläche 68 in eine Ebene senkrecht zu der Vorspannrichtung der Feder 90 bildet eine zweite projizierte Fläche. Die Flächennormale auf die zweite projizierte Fläche erstreckt sich in Richtung der Öffnungsbewegung des Kolbens 60.

Die Gestaltung des Kolbens 60 ist nun so gewählt, dass im geschlossenen Zustand des Kolbens 60, wie er in Figur 7 gezeigt ist, der Flächeninhalt der ersten projizierten Fläche größer ist als der Flächeninhalt der zweiten projizierten Fläche. Während des Betriebs des Hochdruckventils 40 steht in der Druckleitung 43 der Druck des Druckraums 24 des Hydraulikzylinders 20 an. Dieser Druck liegt auch an der 1. Druckfläche 66 an. Über die Durchführung 61 steht der Druck auch in einem Fluidbereich 72 an, der vor der 2. Druckfläche 68 gebildet ist. Damit lastet dieser Druck auch auf der 2. Druckfläche 68. Da nun die projizierte 1. Fläche größer ist als die projizierte 2. Fläche würde, aufgrund der herrschenden Druckverhältnisse, sich der Kolben 60 vom Ventilsitz 47.6 abheben. Die Feder 90 wirkt dem entgegen. Dementsprechend ist die Vorspannkraft der Feder 90 so gewählt, dass sie die aufgrund der Flächendifferenz entstehende Kraft in Öffnungsrichtung des Kolbens 60 kompensiert und darüber hinaus noch eine verbleibende Vorspannkraft aufbringt, die den Kolben 60 sicher gegen den Ventilsitz 47.6 presst.

Wenn nun eine kritische Überlastsituation auftritt, so erhöht sich sprunghaft der Druck im Druckraum 24 des Hydraulikzylinders 20. Dieser Druck steht dann auch an der 1. und der 2. Druckfläche 66, 68 an. Wenn der Druck einen kritischen Schwellenwert überschreitet, so spricht das Hochdruckventil 40 an.

Dieser kritische Druck kann abhängig von der Ausgestaltung des Rotationsprallbrechers im Bereich größer 150 bar, größer 200 bar, größer 250 bar oder größer 300 bar oder größer 350 bar gewählt sein.

Bei Anliegen dieses kritischen Drucks erhöht sich die resultierende und in Öffnungsrichtung des Kolbens 60 wirkende Kraft, bewirkt durch den an der 1. und 2. Druckfläche 66, 68 anstehenden Druck. Diese Kraft wird dann größer als die Vorspannkraft der Feder 90. Hierdurch wird der Kolben 60 von dem Ventilsitz 47.6 abgehoben. Die Hydraulikflüssigkeit kann aus der Druckleitung 43 abfließen. Dabei fließt die Hydraulikflüssigkeit an dem geöffneten Ventilsitz 47.6 vorbei und gelangt in den Bereich vor der 3. Druckfläche 67. Dort bewirkt der Druck in der Hydraulikflüssigkeit eine weitere Vergrößerung der auf den Kolben 60 einwirkenden Kraft in Öffnungsrichtung des Kolbens 60. Diese zusätzliche Kraft führt zu einer schnellen Öffnung des Hochdruckventils 40.

Die Hydraulikflüssigkeit kann an der 3. Druckfläche 67 vorbeiströmen. Sie gelangt somit in den Niederdruckbereich. Die Hydraulikflüssigkeit gelangt dann über den Leitungsabschnitt 47.3 in den Entlastungsraum 48 und kann über die Ausströmöffnung 48.1 abströmen.

Vorzugsweise wird das ausströmende Hydraulikfluid gesammelt und in das Hydrauliksystem zurückgeführt, beispielsweise unter Vermittlung eines Tanks und einer Pumpe.

Wenn das Hochdruckventil 40 auf diese Weise ausgelöst wird, dann wird der Kolben 23 des Hochdruckzylinders 20 unter Verkleinerung des Druckraums 24 in den Zylinder 25 eingeschoben. Dabei wird dann in kurzer Zeit eine große Menge an Hydraulikflüssigkeit aus dem Zylinder 25 verdrängt. Dies führt zu einer schnellen und weiten Vergrößerung des Brechspalts 15. Diese Situation ist in Figur 3 dargestellt. Der nicht brechbare Gegenstand 19.3 hat die Überlastsituation bewirkt. Das Hochdruckventil 40 hat ausgelöst und der Brechkörper 14 wurde unter Bildung einer maximalen Brechspaltweite verstellt. Nun kann der nicht brechbare Gegenstand 19.3 aus dem Brechspalt 15 herausfallen.

Nachdem der nicht brechbare Gegenstand 19.3 aus dem Brechspalt 15 herausgefallen ist, ist die Überlast-Situationen aufgehoben. Die durch den nicht brechbaren Gegenstand 19.3 bewirkte Auflastung des Kolbens 23 im Hochdruckzylinder 20 entfällt. Der Druck im Druckraum 24 sinkt ab. Hierdurch schließen sowohl das Hochdruckventil 40 als auch das gegebenenfalls ausgelöste Druckventil 31. Wenn diese beiden Ventile geschlossen sind, so kann mittels der Maschinensteuerung wieder die Befüllung des Druckraums 24 des Hydraulikzylinders 20 vorgenommen werden, bis dieser seine Ausgangsstellung (Figur 2) in Betriebsposition erreicht.

In Figur 6 ist eine Ausgestaltungsvariante gezeigt, bei der ein Wegmesser 50 an dem Hochdruckventil 40 montiert ist. Bei dem Wegmesser 50 kann es sich beispielsweise um einen induktiven Messfühler handeln. Über den Wegmesser 50 kann die Position des Kolbens 60 ermittelt oder erkannt werden. Diese Information kann in der Maschinensteuerung ausgewertet werden. Zusätzlich oder alternativ kann auch ein Messanschluss 49 für weitere Parameter wie zum Beispiel einen Druckmesser oder einen Temperaturmesser vorgesehen sein. Der Druckmesser misst den Druck im Entlastungsraum 48.

Wie Figur 7 zeigt, ist zwischen dem Führungskörper 47 und dem Kolben 60 ein Raum gebildet, in dem die Feder 90 angeordnet ist. Dieser Raum wird weiterhin von dem Führungsabschnitt 64 begrenzt, der gedichtet an der Innenwand 47.2 entlang laufen kann. Wenn hier keine Abdichtung vorgesehen ist, oder keine hohen Ansprüche an die Dichtung gefordert sind, kann es vorkommen, dass bei ausgelöstem Hochdruckventil 40 Hydraulikflüssigkeit in den Raum gelangt. Diese würde die freie Verstellbarkeit des Kolbens 60 behindern. Aus diesem Grund ist eine Ableitung 69 vorgesehen, die aus dem Raum herausführt und zu einem Niederdruckbereich geleitet ist. Etwaige sich ansammelnde Hydraulikflüssigkeit kann dann ausgeleitet werden.

## Patentansprüche

1. Brecher für mineralische Werkstoffe oder Recyclingwerkstoffe, insbesondere Rotationsprallbrecher oder Backenbrecher, mit einem Brechaggregat (10) , das einen beweglichen ersten Brechkörper (11), insbesondere einen Rotor oder eine Brechbacke aufweist, wobei dem ersten Brechkörper (11) ein zweiter Brechkörper (14) , insbesondere eine Prallschwinge oder eine Brechbacke zugeordnet ist, wobei zwischen den Brechkörpern (11, 14) ein Brechspalt (15) gebildet ist, wobei mit dem ersten oder dem zweiten Brechkörper eine Überlast-Auslöseeinrichtung (30) gekoppelt ist, die einen Hydraulikzylinder (20) aufweist und die dazu ausgebildet eine, die Breite des Brechspalts (15) vergrößernde Bewegung des angekoppelten Brechkörpers (11, 14) zuzulassen, wobei der Hydraulikzylinder (20) einen Druckraum (24) aufweist, der mittels eines Kolbens (23) begrenzt ist, und wobei die Überlast-Auslöseeinrichtung (30) ein Druckventil (31) aufweist, das in seiner Öffnungsstellung eine fluidleitende Verbindung zwischen dem Druckraum (24) und einem Niederdruckbereich schafft und in der geschlossenen Ventilstellung diese Verbindung sperrt, wobei die Überlast-Auslöseeinrichtung (30) ein Hochdruckventil (40) aufweist, das infolge einer Überlastsituation in seiner Öffnungsstellung eine fluidleitende Verbindung zwischen dem Druckraum (24) des Hydraulikzylinders (20) und einem Niederdruckbereich schafft, und nach Beendigung der Überlastsituation in eine Schließstellung verstellt wird, um diese Verbindung zu sperren, und wobei der für die Öffnung des Druckventils (31) erforderliche Auslösedruck geringer ist als der für die Öffnung des Hochdruckventils (40) erforderliche Auslösedruck.

2. Brecher nach Anspruch 1, **dadurch gekennzeichnet, dass** der erforderliche Auslösedruck zur Öffnung des Druckventils (31) ≤100 bar ist, und dass der erforderliche Auslösedruck zur Öffnung des Hochdruckventils (40) ≥150 bar ist.

3. Brecher nach Anspruch 1 oder 2, **dadurch gekennzeichnet, dass** bei geöffnetem Druckventil (31) der an den Hydraulikzylinder (20) angekoppelte Brechkörper (14) derart verstellt wird, dass sich eine erste Breitenvergrößerung des Brechspalts (15) ergibt, dass bei geöffnetem Hochdruckventil (40) der an den Hydraulikzylinder (20) angekoppelte Brechkörper (14) derart verstellt wird, dass sich eine zweite Breitenvergrößerung des Brechspalts (15) ergibt, und dass die erste Breitenvergrößerung kleiner ist als die zweite Breitenvergrößerung, wobei vorzugsweise vorgesehen ist, dass das Verhältnis der ersten Breitenvergrößerung zu der zweiten Breitenvergrößerung ≤ 0,5, besonders bevorzugt ≤0,25 ist.

4. Brecher nach einem der Ansprüche 1 bis 3, **dadurch gekennzeichnet, dass** infolge der Öffnung des ersten Druckventils (31) eine erste Menge Hydraulikflüssigkeit über die fluidleitende Verbindung in den Niederdruckbereich gelangt, dass infolge der Öffnung des Hochdruckventils (40) eine zweite Menge an Hydraulikflüssigkeit über die zugeordnete fluidleitende Verbindung in den Niederdruckbereich gelangt, und dass die erste Menge kleiner ist als die zweite Menge, wobei vorzugsweise vorgesehen ist, dass die das Verhältnis der ersten Menge zu der zweiten Menge ≤ 0,5 , besonders bevorzugt ≤ 0,25 ist.

5. Brecher, nach einem der Ansprüche 1 bis 4, **dadurch gekennzeichnet, dass** die Überlast-Auslöseeinrichtung (30) an einen Hydraulikkreislauf angeschlossen ist, und dass die über die fluidleitende Verbindung des Hochdruckventils (40) abgeleitete Hydraulikflüssigkeit über eine Verbindungsleitung in den Hydraulikkreislauf geleitet wird.

6. Brecher nach einem der Ansprüche 1 bis 5, **dadurch gekennzeichnet, dass** das Hochdruckventil (40) einen Kolben (60) aufweist, der gegen die Vorspannung einer Feder (90) zwischen der Schließstellung und der Öffnungsstellung verstellbar ist, und dass der Kolben (60) ein Druckstück (65) aufweist, das in der Schließstellung an einem Ventilsitz (47.6) federvorgespannt abgedichtet gehalten ist.

7. Brecher nach Anspruch 6, **dadurch gekennzeichnet, dass** der Kolben (60) erste und zweite Druckfläche (66 und 68) aufweist, dass in der geschlossenen Stellung des Hochdruckventils (40) auf diesen Druckflächen (66 und 68) der im Druckraum (24) des Hydraulikzylinder (20) anstehende Hydraulikdruck auflastet, dass die Projektionen der ersten und der zweiten Druckflächen (66, 68) in eine Ebene senkrecht zu der Vorspannrichtung der Feder (90) eine erste und eine zweite projizierte Fläche bilden, wobei sich die Flächennormale auf die erste projizierte Fläche entgegengesetzt zu der Richtung der Öffnungsbewegung des Kolbens (60) erstreckt, und sich die Flächennormale auf die zweite projizierte Fläche in Richtung der Öffnungsbewegung des Kolbens (60) erstreckt, und dass der Flächeninhalt der ersten projizierten Fläche größer ist als der Flächeninhalt der zweiten projizierten Fläche.

8. Brecher nach einem der Ansprüche 6 oder 7, **dadurch gekennzeichnet, dass** der Kolben (60) eine erste Druckfläche (66) oder erste Druckflächen (66) aufweist, dass in der geschlossenen Stellung des Hochdruckventils (40) auf der Druckfläche (66) oder den Druckflächen (66) der im Druckraum (24) des Hydraulikzylinder (20) anstehende Hydraulikdruck auflastet, dass die Projektion der erste/-n Druckfläche/-n (66) in eine Ebene senkrecht zu der Vorspannrichtung der Feder (90) eine erste projizierte Fläche bildet/bilden, wobei sich die Flächennormale auf diese erste projizierte Fläche entgegengesetzt zu der Richtung der Öffnungsbewegung des Kolbens (60) erstreckt, dass der Kolben (60) wenigstens eine dritte Druckfläche (67) aufweist, dass die Projektion der dritten Druckfläche/-n (67) in eine Ebene senkrecht zu der Vorspannrichtung der Feder (90) eine dritte projizierte Fläche bildet, wobei sich die Flächennormale auf diese dritte projizierte Fläche entgegengesetzt zu der Richtung der Öffnungsbewegung des Kolbens (60) erstreckt, dass der Hydraulikdruck im Druckraum (24) des Hydraulikzylinders (20) in der Schließstellung des Hochdruckventils (40) nicht an der dritten Druckfläche (67) ansteht und dass in der geöffneten Ventilstellung eine räumliche Verbindung zwischen der dritten Druckfläche (67) und dem Druckraum (24) geschaffen ist.

9. Brecher nach einem der Ansprüche 6 bis 8, **dadurch gekennzeichnet, dass** der Kolben (60) des Hochdruckventils (40) eine Durchführung (61) aufweist, die insbesondere als Bohrung ausgebildet ist, und die eine räumliche Verbindung zwischen dem Bereich vor der ersten Druckfläche (66) und dem Fluidbereich (72) vor der zweiten Druckfläche (68) schafft.

10. Brecher nach einem der Ansprüche 1 bis 9, **dadurch gekennzeichnet, dass** der Kolben (60) des Hochdruckventils (40) einen Stützabschnitt (62) aufweist, auf den die als Schraubenfeder ausgebildete Feder (90) aufgeschoben ist, dass der Kolben (60) eine Schulter (63) aufweist, an der das eine Ende der Feder (90) abgestützt ist, und dass das andere Ende der Feder (90) an einem Federhalter (70) abgestützt ist, der Teil eines Ventilkörpers (45) ist in den der Kolben eingesetzt ist.

11. Brecher nach einem der Ansprüche 1 bis 10, **dadurch gekennzeichnet, dass** der Kolben (60) des Hochdruckventils (40) einen Führungsabschnitt (64) aufweist, der vorzugsweise abgedichtet an einer Innenwand (47.2) eines Führungskörpers (47) geführt ist.

12. Brecher nach einem der Ansprüche 1 bis 11, **dadurch gekennzeichnet, dass** der Ventilsitz (47.6) für den Kolben (60) von einem Ventilstück (47.4) des Führungskörpers (47) gebildet ist, der vorzugsweise in Form einer Buchse ausgebildet ist, dass der Führungskörper (47) in eine Aufnahme eines Ventilkörpers (45) des Hochdruckventils (40) eingesetzt ist, und dass der Führungskörper (47) wenigstens einen Leitungsabschnitt (47.3) bildet, über den das Hydraulikmedium in der Öffnungsstellung des Hochdruckventils (40) aus dem Druckraum (24) abströmt.

13. Brecher nach einem der Ansprüche 1 bis 12, **dadurch gekennzeichnet, dass** der Führungskörper (47) eine Innenwand (47.2) aufweist, die im Abstand zu dem Stützabschnitt (62) des Kolbens (60) steht, und dass im Abstandsbereich die Feder (90) aufgenommen ist.

14. Brecher nach einem der Ansprüche 1 bis 13, **dadurch gekennzeichnet, dass** das Hochdruckventil (40) ein Koppelstück (41) und einen Ventilkörper (45) aufweist, die miteinander über Anschlussseiten (44, 46) verbunden sind, dass das Koppelstück (41) und der Ventilkörper (45) im Bereich dieser Anschlussseiten (44, 46) einen Entlastungsraum (48) begrenzen, und dass der Entlastungsraum (48) in der Öffnungsstellung des Hochdruckventils (40) eine fluidleitende Verbindung zwischen dem Druckraum (24) des Hydraulikzylinders (20) und einer Ableitung (69) des Hochdruckventils (40) schafft.

15. Brecher nach einem der Ansprüche 1 bis 14, **dadurch gekennzeichnet, dass** der Kolben (60) des Hochdruckventils (40) einen Raumbereich gegenüber dem Druckraum (24) des Hydraulikzylinders (20) räumlich abgrenzt, und dass dieser Raumbereich über eine Ableitung (69) mit einem Niederdruckbereich in räumlicher Verbindung steht, wobei in dem Raumbereich vorzugsweise die Feder (90) aufgenommen ist.

16. Brecher nach einem der Ansprüche 1 bis 15, **dadurch gekennzeichnet, dass** ein Wegmesser (50) vorgesehen ist, mittels dem die Stellung des Kolbens (60) gemessen oder erkannt wird.

17. Brecher nach einem der Ansprüche 1 bis 16, **dadurch gekennzeichnet, dass** der Hydraulikzylinder (20) in einem Zylinderbereich einen Kolben (23) aufweist, der den Druckraum (24) begrenzt und an dem eine Kolbenstange (22) angekoppelt ist, und dass die Kolbenstange (22) über ein Koppelstück (21) schwenkbar an den Brechkörper (14) schwenkbar angekoppelt ist.

18. Brecher nach einem der Ansprüche 1 bis 17, **dadurch gekennzeichnet, dass** das Druckventil (31) und das Hochdruckventil (40) mit dem Hydraulikzylinder (20) unter Bildung einer Baueinheit miteinander verbunden sind.

19. Brecher nach einem der Ansprüche 1 bis 11, **dadurch gekennzeichnet, dass** eine Steuereinrichtung vorgesehen ist, die nach Beendigung der Überlast-Situation und nach dem Schließen des Druckventils (31) und des Hochdruckventils (40) den Hydraulikzylinder mit Hydraulikflüssigkeit derart befüllt, dass dieser unter Bildung des Betriebs-Brechspalts (15) in seine Betriebsposition rückgestellt wird.

## Claims

1. A crusher for mineral materials or recycled materials, in particular rotary impact crusher or jaw crusher, having a crusher unit (10), which has a movable first crusher body (11), in particular a rotor or a crusher jaw, wherein a second crusher body (14), in particular an impact rocker or a crusher jaw, is assigned to the first crusher body (11), wherein a crushing gap (15) is formed between the crusher bodies (11, 14), wherein an overload triggering device (30) is coupled to the first crusher body or to the second crusher body, which overload triggering device has a hydraulic cylinder (20) and which overload triggering device is designed to permit a motion of the coupled crusher body (11, 14) increasing the width of the crushing gap (15), wherein the hydraulic cylinder (20) has a pressure chamber (24), which is delimited by means of a piston (23), and wherein the overload triggering device (30) has a pressure valve (31), which, in its open position, establishes a fluid-conveying connection between the pressure chamber (24) and a low-pressure area and, in the closed valve position, blocks this connection, wherein the overload triggering device (30) has a high-pressure valve (40), which, as a result of an overload situation, in its open position establishes a fluid-conveying connection between the pressure chamber (24) of the hydraulic cylinder (20) and a low-pressure area and, after the overload situation has ended, is moved into a closed position to block this connection, and wherein the triggering pressure required to open the pressure valve (31) is lower than the triggering pressure required to open the high-pressure valve (40).

2. The crusher according to claim 1, **characterized in that** the trigger pressure required to open the pressure valve (31) is ≤100bar, and that the trigger pressure required to open the high-pressure valve (40) is ≥150bar.

3. The crusher according to claim 1 or 2, **characterized in that** the crusher body (14) coupled to the hydraulic cylinder (20) is adjusted in such a way that for an open pressure valve (31) a first increase in width of the crushing gap (15) results, **in that** the crusher body (14) coupled to the hydraulic cylinder (20) is adjusted in such a way that a second increase in width of the crushing gap (15) results for an open high-pressure valve (40), and that the first increase in width is smaller than the second increase in width, wherein provision is preferably made that the ratio of the first increase in width to the second increase in width is ≤ 0.5, particularly preferably ≤ 0.25.

4. The crusher, according to any one of the claims 1 to 3, **characterized in that** as a result of opening the first pressure valve (31), a first quantity of hydraulic fluid enters the low-pressure area through the fluid-conveying connection, **in that**, as a result of the opening of the high-pressure valve (40), a second quantity of hydraulic fluid enters the low-pressure area through the assigned fluid-conveying connection, and **in that** the first quantity is smaller than the second quantity, wherein provision is preferably made that the ratio of the first quantity to the second quantity is ≤ 0.5, more preferably ≤ 0.25.

5. The crusher, according to any one of the claims 1 to 4, **characterized in that** the overload triggering device (30) is connected to a hydraulic circuit, and **in that** the hydraulic fluid discharged via the fluid-conveying connection of the high-pressure valve (40) is fed into the hydraulic circuit via a connecting line.

6. The crusher according to any one of the claims 1 to 5, **characterized in that** the high-pressure valve (40) comprises a piston (60) that can be adjusted between the closed position and the open position against the preload of a spring (90), and **in that** the piston (60) comprises a pressure piece (65), which, in the closed position, is pressed against a valve seat (47.6) by a spring- preload in a sealed manner.

7. The crusher according to claim 6, **characterized in that** the piston (60) has a first and a second pressure surface (66 and 68), **in that** in the closed position of the high-pressure valve (40) the hydraulic pressure present in the pressure chamber (24) of the hydraulic cylinder (20) pressurizes these pressure surfaces (66 and 68), **in that** the projections of the first and second pressure surfaces (66, 68) form a first and a second projected surface in a plane perpendicular to the preloading direction of the spring (90), wherein the surface normal to the first projected surface extends opposite from the direction of the opening motion of the piston (60), and the surface normal to the second projected surface extends in the direction of opening motion of the piston (60), and **in that** the area of the first projected surface is greater than the area of the second projected surface.

8. The crusher according to any one of the claims 6 or 7, **characterized in that** the piston (60) has a first pressure surface (66) or first pressure surfaces (66), **in that** in the closed position of the high-pressure valve (40) the hydraulic pressure present in the pressure chamber (24) of the hydraulic cylinder (20) pressurizes the pressure surface (66) or pressure surfaces (66), **in that** the projection of the first pressure surface(s) (66) in a plane perpendicular to the preloading direction of the spring (90) forms a first projected surface, wherein the surface normal to this first projected surface extends opposite from the direction of the opening motion of the piston (60), **in that** the piston (60) has at least one third pressure surface (67), **in that** the projection of the third pressure surface(s) (67) in a plane perpendicular to the preloading direction of the spring (90) forms a third projected surface, wherein the surface normal to this third projected surface extends in the direction opposite from the direction of the opening motion of the piston (60), **in that** in the closed position of the high-pressure valve (40) the hydraulic pressure in the pressure chamber (24) of the hydraulic cylinder (20) is not present at the third pressure surface (67), and **in that** a spatial connection is established between the third pressure surface (67) and the pressure chamber (24) in the open valve position.

9. The crusher according to any one of the claims 6 to 8, **characterized in that** the piston (60) of the high-pressure valve (40) has a penetration (61), which is designed in particular as a drilled hole, and which penetration establishes a spatial connection between the area upstream of the first pressure surface (66) and the fluid area (72) upstream of the second pressure surface (68).

10. The crusher according to any one of the claims 1 to 9, **characterized in that** the piston (60) of the high-pressure valve (40) has a support section (62), on which the spring (90), which is designed as a helical spring, is pushed, **in that** the piston (60) has a shoulder (63) supporting one end of the spring (90), and **in that** the other end of the spring (90) is supported on a spring holder (70), which is part of a valve body (45) into which the piston is inserted.

11. The crusher according to any one of the claims 1 to 10, **characterized in that** the piston (60) of the high-pressure valve (40) has a guide section (64), which is preferably guided on an inner wall (47.2) of a guide body (47) in a sealed manner.

12. The crusher according to one of the claims 1 to 11, **characterized in that** the valve seat (47.6) for the piston (60) is formed by a valve piece (47.4) of the guide body (47), which is preferably designed in the form of a bushing, **in that** the guide body (47) is inserted into a mount of a valve body (45) of the high-pressure valve (40), and **in that** the guide body (47) forms at least one line section (47.3), through which the hydraulic medium flows out of the pressure chamber (24) in the open position of the high-pressure valve (40).

13. The crusher according to any one of the claims 1 to 12, **characterized in that** the guide body (47) has an inner wall (47.2) spaced apart from the support portion (62) of the piston (60), and **in that** the spring (90) is mounted in the spaced-apart area.

14. The crusher according to one of the claims 1 to 13, **characterized in that** the high-pressure valve (40) has a coupling piece (41) and a valve body (45), which are connected to one another via connection ends (44, 46), **in that** the coupling piece (41) and the valve body (45) delimit a relief chamber (48) in the area of these connection ends (44, 46), and **in that**, in the open position of the high-pressure valve (40), the relief chamber (48) establishes a fluid-conveying connection between the pressure chamber (24) of the hydraulic cylinder (20) and a drain (69) of the high-pressure valve (40).

15. The crusher according to any one of the claims 1 to 14, **characterized in that** the piston (60) of the high-pressure valve (40) spatially delimits a spatial area with respect to the pressure chamber (24) of the hydraulic cylinder (20), and **in that** this spatial area is spatially connected to a low-pressure area via a drain (69), wherein the spring (90) is preferably mounted in the spatial area.

16. The crusher according to any one of the claims 1 to 15, **characterized in that** a displacement sensor (50) is provided, which is used to measure or detect the position of the piston (60).

17. The crusher according to any one of the claims 1 to 16, **characterized in that** the hydraulic cylinder (20) has, in a cylinder area, a piston (23) delimiting the pressure chamber (24) and to which piston a piston rod (22) is coupled, and **in that** the piston rod (22) is swivel coupled to the crusher body (14) via a coupling piece (21).

18. The crusher according to any one of the claims 1 to 17, **characterized in that** the pressure valve (31) and the high-pressure valve (40) are connected to the hydraulic cylinder (20) to form a structural unit.

19. The crusher according to any one of the claims 1 to 11, the overload situation has ended and the pressure valve (31) and the high-pressure valve (40) have been closed, fills the hydraulic cylinder with hydraulic fluid in such a way that the latter is returned to its operating position, forming the crushing gap (15) in the operating state.

## Revendications

1. Concasseur pour matériaux minéraux ou matériaux de recyclage, en particulier impacteur rotatif ou concasseur à mâchoires, avec un agrégat de concassage (10), qui présente un premier corps de concassage (11) mobile, en particulier un rotor ou une mâchoire de concassage, un deuxième corps de concassage (14), en particulier un bras oscillant à impact ou une mâchoire de concassage, étant associé au premier corps de concassage (11), une fente de concassage (15) étant formée entre les corps de concassage (11, 14), un dispositif de déclenchement de surcharge (30) étant couplé au premier ou au deuxième corps de concassage, qui présente un vérin hydraulique (20) et qui est conçu pour autoriser un mouvement du corp de concassage (11, 14) couplé, augmentant la largeur de la fente de concassage (15), le vérin hydraulique (20) présentant une chambre de pression (24) qui est délimitée au moyen d'un piston (23), et le dispositif de déclenchement de surcharge (30) présentant une soupape de pression (31) qui, dans sa position d'ouverture, crée une liaison conduisant le fluide entre la chambre de pression (24) et une zone de basse pression et qui, dans la position de fermeture de la soupape, bloque cette liaison, dans lequel , le dispositif de déclenchement de surcharge (30) présente une soupape haute pression (40) qui, suite à une situation de surcharge, crée dans sa position d'ouverture une liaison de conduction de fluide entre la chambre de pression (24) du vérin hydraulique (20) et une zone basse pression, et qui, après la fin de la situation de surcharge, est déplacée dans une position de fermeture afin de bloquer cette liaison, et dans lequel la pression de déclenchement nécessaire pour l'ouverture de la soupape de pression (31) est inférieure à la pression de déclenchement nécessaire pour l'ouverture de la soupape haute pression (40).

2. Concasseur selon la revendication 1, **caractérisé en ce que** la pression de déclenchement requise pour ouvrir la vanne de refoulement (31) est ≤100 bar, et **en ce que** la pression de déclenchement requise pour ouvrir la vanne haute pression (40) est ≥150 bar.

3. Concasseur selon la revendication 1 ou 2, **caractérisé en ce que**, lorsque la soupape de pression (31) est ouverte, le corps de concassage (14) couplé au cylindre hydraulique (20) est déplacé de telle sorte qu'il en résulte une première augmentation de la largeur de la fente de concassage (15), **en ce que**, lorsque la soupape haute pression (40) est ouverte, le corps de concassage (14) couplé au cylindre hydraulique (20) est déplacé de telle sorte, de sorte qu'il en résulte une deuxième augmentation de la largeur de la fente de concassage (15), et **en ce que** la première augmentation de la largeur est inférieure à la deuxième augmentation de la largeur, étant de préférence prévu que le rapport entre la première augmentation de la largeur et la deuxième augmentation de la largeur soit ≤ 0,5, de préférence ≤0,25.

4. Concasseur selon l'une des revendications 1 à 3, **caractérisé en ce que**, suite à l'ouverture de la première vanne de refoulement (31), une première quantité de fluide hydraulique passe dans la zone basse pression via la liaison fluidique, **en ce que**, suite à l'ouverture de la vanne haute pression (40), une deuxième quantité de fluide hydraulique passe dans la zone basse pression via la liaison fluidique associée, et **en ce que** la première quantité est inférieure à la deuxième quantité, de préférence en prévoyant que le rapport de la première quantité sur la deuxième quantité est ≤ 0,5 , plus préférentiellement ≤ 0,25.

5. Concasseur, selon l'une quelconque des revendications 1 à 4, **caractérisé en ce que** le dispositif de déclenchement de surcharge (30) est raccordé à un circuit hydraulique, et **en ce que** le fluide hydraulique évacué par la liaison fluidique de la vanne haute pression (40) est dirigé vers le circuit hydraulique par une conduite de liaison.

6. Concasseur selon l'une des revendications 1 à 5, **caractérisé en ce que** la soupape haute pression (40) comporte un piston (60) qui peut être déplacé entre la position de fermeture et la position d'ouverture à l'encontre de la précontrainte d'un ressort (90), et **en ce que** le piston (60) comporte une pièce de pression (65) qui, dans la position de fermeture, est maintenue de manière étanche et précontrainte par un ressort sur un siège de soupape (47.6).

7. Concasseur selon la revendication 6, **caractérisé en ce que** le piston (60) présente une première et une deuxième surface de pression (66 et 68), **en ce que**, dans la position fermée de la soupape haute pression (40), la pression hydraulique présente dans la chambre de pression (24) du vérin hydraulique (20) s'exerce sur ces surfaces de pression (66 et 68), **en ce que** les projections de la première et de la deuxième surface de pression (66, 68) dans un plan perpendiculaire à la direction de précontrainte du ressort (90) forment une première et une deuxième surface projetée, la normale à la première surface projetée s'étendant dans le sens opposé au sens du mouvement d'ouverture du piston (60), et la normale à la seconde surface projetée s'étendant dans le sens du mouvement d'ouverture du piston (60), et **en ce que** l'aire de la première surface projetée est supérieure à l'aire de la seconde surface projetée.

8. Concasseur selon l'une des revendications 6 ou 7, **caractérisé en ce que** le piston (60) présente une première surface de pression (66) ou des premières surfaces de pression (66), **en ce que**, lorsque la vanne haute pression (40) est en position fermée, la pression hydraulique présente dans la chambre de pression (24) du vérin hydraulique (20) s'exerce sur la surface de pression (66) ou les surfaces de pression (66), **en ce que** la projection de la ou des premières surfaces de pression (66) dans un plan perpendiculaire à la direction de précontrainte du ressort (90) forme une première surface projetée, la normale à la surface s'étendant sur cette première surface projetée à l'opposé de la direction du mouvement d'ouverture du piston (60), **en ce que** le piston (60) présente au moins une troisième surface de pression (67), **en ce que** la projection de la troisième surface/des troisièmes surfaces de pression (67) dans un plan perpendiculaire à la direction de précontrainte du ressort (90) forme une troisième surface projetée, la normale à la surface s'étendant sur cette troisième surface projetée à l'opposé de la direction du mouvement d'ouverture du piston (60), **en ce que** la pression hydraulique dans la chambre de pression (24) du vérin hydraulique (20) n'est pas appliquée sur la troisième surface de pression (67) dans la position de fermeture de la vanne haute pression (40) et **en ce qu'**une liaison spatiale est créée entre la troisième surface de pression (67) et la chambre de pression (24) dans la position ouverte de la vanne.

9. Concasseur selon l'une des revendications 6 à 8, **caractérisé en ce que** le piston (60) de la soupape haute pression (40) présente un passage (61), qui est notamment réalisé sous la forme d'un alésage, et qui crée une liaison spatiale entre la zone en amont de la première surface de pression (66) et la zone de fluide (72) en amont de la deuxième surface de pression (68).

10. Concasseur selon l'une des revendications 1 à 9, **caractérisé en ce que** le piston (60) de la soupape haute pression (40) présente une section d'appui (62) sur laquelle est enfilé le ressort (90) conçu comme un ressort hélicoïdal, **en ce que** le piston (60) présente un épaulement (63) sur lequel s'appuie une extrémité du ressort (90), et **en ce que** l'autre extrémité du ressort (90) s'appuie sur un support de ressort (70) qui fait partie d'un corps de soupape (45) dans lequel est inséré le piston.

11. Concasseur selon l'une des revendications 1 à 10, **caractérisé en ce que** le piston (60) de la soupape haute pression (40) présente une section de guidage (64) qui est guidée, de préférence de manière étanche, sur une paroi intérieure (47.2) d'un corps de guidage (47).

12. Concasseur selon l'une des revendications 1 à 11, **caractérisé en ce que** le siège de soupape (47.6) pour le piston (60) est formé par une pièce de soupape (47. 4) du corps de guidage (47), qui est de préférence réalisé sous la forme d'une douille, **en ce que** le corps de guidage (47) est inséré dans un logement d'un corps de soupape (45) de la soupape haute pression (40), et **en ce que** le corps de guidage (47) forme au moins un tronçon de conduite (47.3) par lequel le fluide hydraulique s'écoule hors de la chambre de pression (24) lorsque la soupape haute pression (40) est en position ouverte.

13. Concasseur selon l'une des revendications 1 à 12, **caractérisé en ce que** le corps de guidage (47) présente une paroi intérieure (47.2) qui se trouve à distance de la section d'appui (62) du piston (60), et **en ce que** le ressort (90) est logé dans la zone d'écartement.

14. Concasseur selon l'une des revendications 1 à 13, **caractérisé en ce que** la soupape haute pression (40) présente une pièce de couplage (41) et un corps de soupape (45) qui sont reliés entre eux par des côtés de raccordement (44, 46), **en ce que** la pièce de couplage (41) et le corps de soupape (45) présentent dans la zone de ces côtés de raccordement (44, 46) délimitent un espace de décharge (48), et **en ce que** l'espace de décharge (48) crée, dans la position d'ouverture de la soupape haute pression (40), une liaison de conduction de fluide entre la chambre de pression (24) du vérin hydraulique (20) et une dérivation (69) de la soupape haute pression (40).

15. Concasseur selon l'une des revendications 1 à 14, **caractérisé en ce que** le piston (60) du clapet haute pression (40) délimite spatialement une zone spatiale par rapport à la chambre de pression (24) du vérin hydraulique (20), et **en ce que** cette zone spatiale est en communication spatiale avec une zone basse pression par l'intermédiaire d'une dérivation (69), la zone spatiale recevant de préférence le ressort (90).

16. Concasseur selon l'une des revendications 1 à 15, **caractérisé en ce qu'**il est prévu un capteur de déplacement (50) au moyen duquel la position du piston (60) est mesurée ou détectée.

17. Concasseur selon l'une des revendications 1 à 16, **caractérisé en ce que** le vérin hydraulique (20) comporte dans une zone du cylindre un piston (23) qui délimite la chambre de pression (24) et auquel est couplée une tige de piston (22), et **en ce que** la tige de piston (22) est couplée de manière pivotante au corps de concassage (14) par l'intermédiaire d'une pièce de couplage (21).

18. Concasseur selon l'une des revendications 1 à 17, **caractérisé en ce que** la soupape de pression (31) et la soupape haute pression (40) sont reliées entre elles au vérin hydraulique (20) en formant un ensemble.

19. Concasseur selon l'une des revendications 1 à 11, **caractérisé en ce qu'**il est prévu un dispositif de commande qui, après la fin de la situation de surcharge et après la fermeture de la soupape de pression (31) et de la soupape haute pression (40), remplit le vérin hydraulique de liquide hydraulique de telle sorte que celui-ci est ramené dans sa position de fonctionnement en formant la fente de rupture de service (15).
